# FASCICULE DE BREVET EUROPEEN

(11) **EP 1 397 950 B1**
(45) Date de publication et mention de la délivrance du brevet: **18.02.2009**
(21) Numéro de dépôt: 03360102.2
(22) Date de dépôt: 09.09.2003
(51) Int. Cl.: A01B 69/02

(54) **Dispositif de tracage pour machine agricole**
Markierungsvorichtung für eine landwirtschaftliche Maschine
Marking device for agricultural machine

(30) Priorité: 11.09.2002 FR 0211304
(43) Date de publication de la demande: 17.03.2004
(73) Titulaire: KUHN S.A., 67700 Saverne (FR)
(72) Inventeur: Constant, Olivier, 77130 Misy sur Yonne (FR)
(74) Mandataire: Andres, Jean-Claude

(56) Documents cités:
- GB-A- 564 015
- GB-A- 1 392 186
- US-A- 2 618 229
- US-A- 3 833 066
- US-A- 4 520 875

## Description

La présente invention se rapporte au domaine technique générale du machinisme agricole. Elle concerne plus particulièrement un dispositif de traçage pour une machine agricole. Le dispositif de traçage comporte notamment un avant-bras et un disque traceur, l'avant-bras étant lié à une machine agricole de travail du sol au moyen d'une première articulation, ledit disque traceur étant lié audit avant-bras au moyen d'un système de fixation comportant une liaison élastique (voir p. ex. US-A-4 520 875).

On connaît un tel dispositif de traçage au travers du document **FR 2 658 979**. Le dispositif de traçage comporte dans les grandes lignes un avant-bras porté latéralement par le châssis d'une machine agricole. Sur cet avant-bras est lié à son extrémité libre un disque traceur au moyen d'un système de fixation. Le système de fixation se compose d'un ressort précontraint. Ledit disque traceur agit sur la surface du sol pendant le fonctionnement et trace un sillon. Ledit ressort précontraint permet, lors du travail, d'absorber les chocs engendrés sur le disque traceur par les irrégularités du sol réalisés par des pierres ou plus généralement par les reliefs de labours. Ces efforts sont proportionnels à la taille de l'obstacle à surmonter. Avec ce système de fixation, il n'est pas à exclure que l'effort sur le disque traceur soit important et que le disque traceur ne soit plus en mesure de faire un repérage visible sur le sol. Ainsi, les opérations de semis ne sont pas réalisées dans de bonnes conditions et le recouvrement du sol n'est donc pas optimal. Les obstacles peuvent être très important voire être infranchissables par le disque traceur, ceux-ci provoquent aussi des ruptures au niveau de l'avant-bras.

Le but de la présente invention est donc de remédier aux inconvénients de ce dispositif de traçage connu, tout en veillant à obtenir une réalisation simple et peu onéreuse.

A cet effet, le dispositif de traçage selon la présente invention est caractérisé en ce que ledit système de fixation comporte en sus un support et un bras, ladite liaison élastique, composée d'un tirant et d'un ressort, agit entre ledit support et ledit bras.

Le disque traceur peut ainsi échapper aux obstacles même importants sans transmettre d'effort important sur l'avant-bras. Cette liaison élastique permet de limiter l'effort transmis par le disque traceur à une valeur sensiblement constante sur une course importante de dégagement du disque traceur.

D'autres objets et caractéristiques de l'invention ressort sortiront de la description ci-après avec références aux dessins annexés qui représentent, à titre d'exemple non limitatif, une forme de réalisation du dispositif selon l'invention.

Sur ces dessins,
- la **figure 1** représente une vue partielle de l'avant d'un semoir équipé d'un dispositif de traçage selon l'invention, le dispositif de traçage est dans une position de travail ;
- la **figure 2** représente une autre vue partielle de l'avant du semoir de la figure 1, le dispositif de traçage est dans une position de transport ;
- les **figures 3 à 5** représentent une vue suivant III de la figure 1 dans différentes phases lors du travail ;
- la **figure 6** représente une vue partielle de l'avant du semoir selon l'invention dans une autre configuration de transport ;
- la **figure 7** représente une vue du dispositif de traçage de la figure 1, à une autre échelle ; et
- la **figure 8** représente une vue du dispositif de traçage de la figure 6, à une autre échelle.

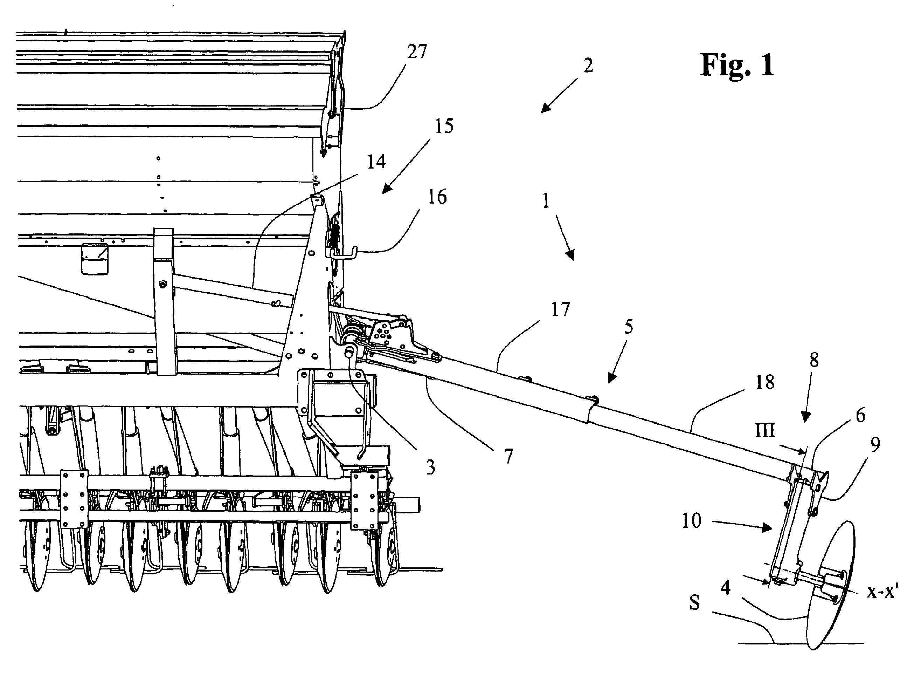

Sur les figures apparaît notamment un dispositif de traçage (1) réalisant un sillon sur la surface du sol (S) afin de repérer une voie. Un tel dispositif de traçage (1) est couramment employé sur des machines agricoles de travail du sol et notamment sur des semoirs pour matérialiser une ligne sur un terrain en vue d'un travail à effectuer. Sur la figure 1, le dispositif de traçage (1) est monté sur un semoir (2) au moyen d'une première articulation (3). Ledit semoir (2) est représenté partiellement sur les figures. Le dispositif de traçage (1) comporte un disque traceur (4) et un avant-bras (5). Cet avant-bras (5) est lié, par une de ses extrémités (6), audit semoir (2) au moyen de la première articulation (3) alors que l'autre extrémité (7) supporte ledit disque traceur (4). Sur la figure 1, le dispositif de traçage (1) est représenté dans une configuration de travail, dans laquelle le disque traceur (4) agit sur le sol (S).

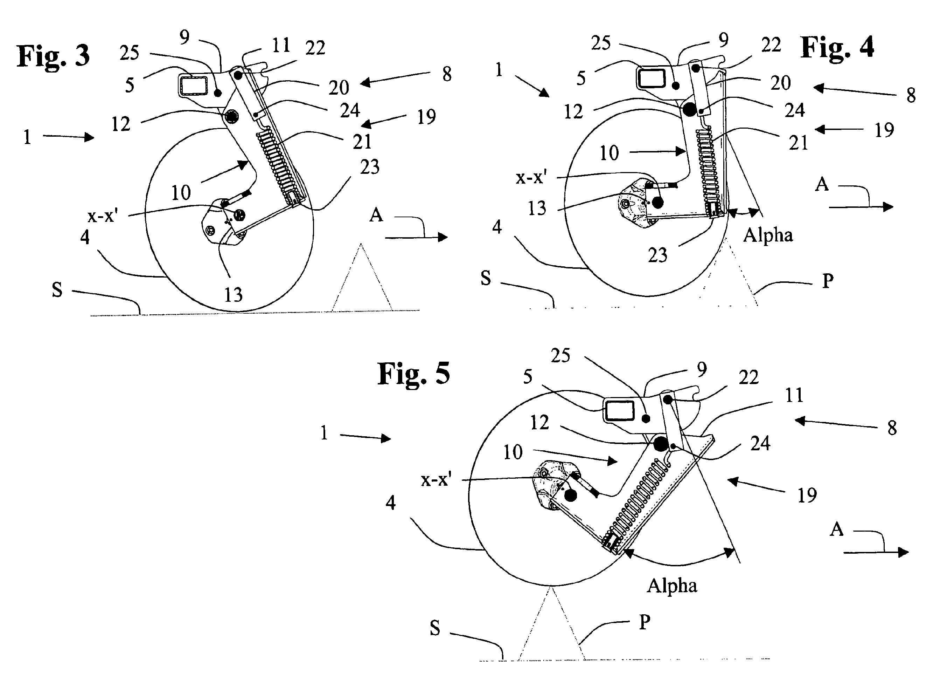

Lors du travail, ledit semoir (2) est lié à un tracteur (non représenté), d'une manière connue de l'homme du métier, et est déplacé suivant une direction et un sens d'avance indiqué par la flèche (A) (figure 3) dans le champ à ensemencer. La figure 1 représente une vue de l'avant du semoir (2), ainsi le sens d'avance (A) est dirigé orthogonalement au plan de la feuille et vers le lecteur. Dans la suite de la description, les notions "avant" et "arrière", "devant" et "derrière" sont définies par rapport au sens d'avance (A) et les notions "droite" et "gauche" sont définies en regardant ledit semoir (2) de l'arrière dans ledit sens d'avance (A).

D'une manière connue, le disque traceur (4), monté sur l'extrémité (7) de l'avant-bras (5), a pour rôle de laisser sur le sol (S) un repère destiné à guider l'utilisateur de la machine agricole lors du prochain passage. Grâce audit avant-bras (5) disposé latéralement, le disque traceur (4) matérialise un repère au sol (S) qui est déporté latéralement par rapport audit semoir (2). Le repère est tracé au sol (S) au fur et à mesure du déplacement du tracteur dans la direction (A). D'une manière connue, ce repère est réalisé dans la partie du champ qui n'a pas encore été ensemencée et permet ainsi d'assurer un recouvrement idéal avec la partie du champ déjà ensemencée. L'avant-bras (5) est disposé sensiblement à l'horizontale et perpendiculairement à la direction d'avance (A) lors du semis comme représenté sur la figure 1.

Lors du travail, l'utilisateur est amené à utiliser ledit semoir (2) en va-et-vient. Un tel dispositif de traçage (1) est donc monté de part et d'autre du semoir (2). Toutefois, seul un desdits dispositifs de traçage (1) est actif lors du semis. C'est toujours le dispositif de traçage (1) se trouvant sensiblement au-dessus de la partie non ensemencée qui est abaissé alors que l'autre se trouve dans une position relevée. Le pilotage desdits dispositifs de traçage (1) se fait avantageusement de manière automatique à partir de la cabine du tracteur par commande mécanique ou hydraulique.

La première articulation (3) liant l'avant-bras (5) audit semoir (2) comporte un axe au moins sensiblement horizontal et parallèle à ladite direction d'avance (A). Ladite première articulation (3) favorise un débattement de l'avant-bras (5) vers le haut et vers le bas et permet audit disque traceur (4) de suivre précisément les dénivellations du sol (S) et de marquer un repère à une profondeur sensiblement constante dans le sol (S). Le dispositif de traçage (1) comporte, d'une manière préférentielle, un disque traceur (4) de grand diamètre, ce qui permet de couper relativement aisément une tranchée dans le sol (S) et d'assurer ainsi un guidage pour le passage suivant. Le sillon doit être suffisamment profond pour être visible, même dans une terre fraîchement labourée.

A la lumière de la figure 1, le disque traceur (4) est avantageusement lié audit avant-bras (5) au moyen d'un système de fixation (8) comportant une liaison élastique (19). Le système de fixation (8) est également constitué d'un support (9) et d'un bras (10). Le support (9) est fixé à l'autre extrémité (7) de l'avant-bras (5). Ledit support (9) comporte avantageusement deux pattes. Ledit bras (10) est, quant à lui, lié à une de ses extrémités (11) entre les deux pattes dudit support (9) par l'intermédiaire d'une deuxième articulation (12) d'axe au moins sensiblement horizontal et perpendiculaire à la direction d'avance (A). Ledit bras (10) est ainsi sensiblement perpendiculaire à l'avant-bras (5). Le bras (10) peut pivoter vers l'avant et vers l'arrière autour de ladite deuxième articulation (12). Ledit disque traceur (4) est, pour sa part, lié à l'extrémité libre (13) dudit bras (10) au moyen d'un axe (x-x'). Cet axe (x-x') s'étend d'une part au moins sensiblement perpendiculaire à la direction d'avance (A) au travail et d'autre part quelque peu incliné vers l'arrière et vers le bas. Dans la position de travail, le disque traceur (4) est donc sensiblement parallèle à la direction d'avance (A). L'axe (x-x') étant légèrement incliné vers l'arrière et vers le bas, il est aisé pour le disque traceur (4) de creuser un repère sur le sol (S) sous forme de sillon. L'axe (x-x') du disque traceur (4) s'étend sensiblement à la verticale de ladite deuxième articulation (12) lors du travail et s'étend sensiblement en dessous de ladite deuxième articulation (12).

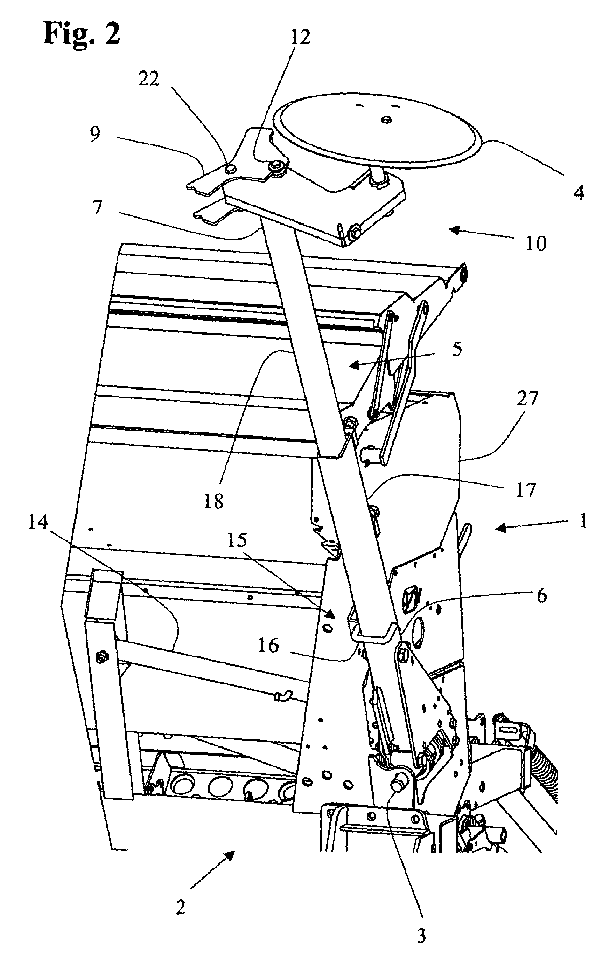

La figure 2 représente le dispositif de traçage (1) dans une position de transport. L'avant-bras (5) est replié vers le haut autour de la première articulation (3) au moyen d'un vérin hydraulique (14). Le repliage de l'avant-bras (5) à la verticale permet également de contourner des obstacles dans le champ et de faciliter les manoeuvres en bordure de parcelle. Pour le transport, l'avant-bras (5) est maintenu dans sa position verticale au moyen d'un dispositif de verrouillage (15). Ce dispositif de verrouillage (15) est réalisé par un verrou (16) qui maintien l'avant-bras (5) relevé contre la trémie (27) du semoir (2) lors du transport.

Selon l'exemple de réalisation représenté sur les figures, l'avant-bras (5) est avantageusement tubulaire et de section transversale rectangulaire. Il est formé, de manière avantageuse, de deux parties complémentaires (17, 18) pouvant coulisser l'une dans l'autre pour réaliser un avant-bras (5) télescopique. L'encombrement en hauteur de l'avant-bras (5) est de ce fait réduit pour le transport, ce qui facilite d'une part le déplacement du semoir (2) sur les routes et d'autre part le remisage du semoir (2) en période hivernale. L'avant-bras (5) comporte ainsi une partie fixe (17) liée audit semoir (2) via la première articulation (3) et une partie mobile (18) soutenant ledit disque traceur (4).

Les figures 3 à 5 représentent le dispositif de traçage (1) dans différentes phases lors du travail. Ces figures montrent plus précisément le système de fixation (8) du bras (10) avec le disque traceur (4) à l'avant-bras (5) suivant la coupe III représentée sur la figure 1. Sur la figure 3, le disque traceur (4) est dans une position de travail idéale comme sur la figure 1. La figure 4 représente, pour sa part, le dispositif de traçage (1) lorsque le disque traceur (4) arrive en contact avec un obstacle (P). La figure 5, quant à elle, représente le dispositif de traçage (1) lorsque le disque traceur (4) surmonte un obstacle (P).

La présente invention est remarquable en ce que le système de fixation (8) comporte ledit support (9) et ledit bras (10) et que ladite liaison élastique (19) agisse entre ledit support (9) et ledit bras (10). Cette liaison élastique (19) permet avantageusement de limiter l'effort transmit par le disque traceur (4) sur l'avant-bras (5) à une valeur sensiblement constante.

A cet effet, la liaison élastique (19) entre le support (9) et le bras (10) se décompose en un tirant (20) et un ressort (21). Le dispositif de traçage (1) peut ainsi échapper à des obstacles importants sans transmettre d'efforts importants à l'avant-bras (5). Le tirant (20) est lié audit support (9) au moyen d'une troisième articulation (22) d'axe au moins sensiblement horizontal et perpendiculaire à la deuxième articulation (12). La troisième articulation (22) s'étend quelque peu au-dessus de ladite deuxième articulation (12) en s'éloignant du sol (S). Le ressort (21) est, quant à lui, lié audit bras (10) par l'intermédiaire d'un moyen de fixation (23). Le ressort (21) et le tirant (20) sont avantageusement liés l'un à l'autre par leur extrémité libre. Cette liaison, entre le ressort (21) et le tirant (20), correspond à une quatrième articulation (24) d'axe au moins sensiblement horizontal et perpendiculaire à la direction d'avance (A) lors du travail. Ladite quatrième articulation (24) est avantageusement parallèle à la deuxième articulation (12) et s'étend au voisinage de la deuxième articulation (12). Selon une caractéristique importante, le ressort (21) et le tirant (20) sont logés à l'intérieur dudit bras (10). Ces éléments (20, 21) sont ainsi protégés de tout obstacle (P) présent dans le champ à ensemencer. D'une manière préférentielle, ledit ressort (21) est un ressort de traction.

La figure 3 représente le dispositif de traçage (1) en position de travail avec des conditions de travail idéales lorsqu'il n'y a pas d'obstacles (P). Néanmoins, l'effort provoqué par la terre sur le disque traceur (4) doit être inférieur à l'effort de précontrainte du ressort (21). Cet effort de précontrainte doit être suffisamment important pour que le disque traceur (4) remplisse parfaitement son rôle. Comme sur la figure 1 le bras (10) est en position de travail, celui-ci est sensiblement vertical et le disque traceur (4) s'étend sensiblement en dessous de l'avant-bras (5) et roule sur le sol (S). Dans cette position de travail, le pivotement du bras (10) vers l'avant autour de la deuxième articulation (12) est limité par une butée. Cette butée est avantageusement formée par l'extrémité (11) dudit bras (10) qui est en contact contre ladite troisième articulation (22). L'effort de précontrainte est tel que le bras (10) reste en butée contre ladite troisième articulation (22) et que le tirant (20) et le ressort (21) sont alignés l'un par rapport à l'autre.

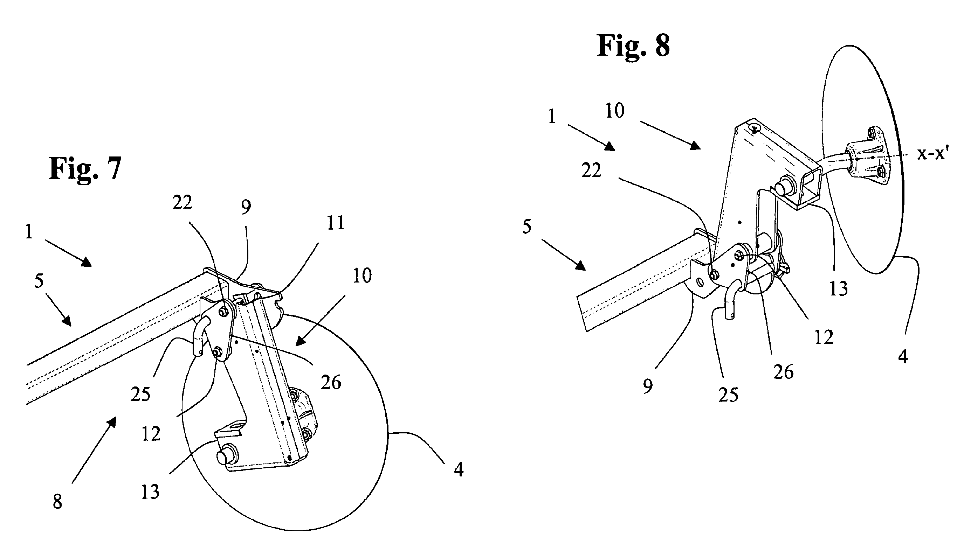

Pour augmenter la stabilité du dispositif de traçage (1) lors du travail, le bras (10) est lié audit support (9) via une broche (25) et un élément de support (26). Pendant le fonctionnement, le bras (10) a tendance à basculer autour de la troisième articulation (22) ce qui est particulièrement gênant pour le marquage du sillon sur le sol (S). Ainsi lorsque le bras (10) est en butée contre la troisième articulation (22), le basculement du bras (10) autour de ladite troisième articulation (22) est bloqué par ladite broche (25). Par contre, ledit bras (10) est libre de pivoter autour de ladite deuxième articulation (12). La broche (25) permet avantageusement de lier le bras (10) par l'intermédiaire de l'élément de support (26) audit support (9). A la lumière des figures 7 et 8, la broche (25) passe au travers de l'élément de support (26) et au travers des deux pattes du support (9). L'élément de support (26) comporte plusieurs ouvertures destinées à recevoir la broche (25), la deuxième articulation (12) et la troisième articulation (22). Le dispositif de traçage (1) représenté sur les figures 1, 2 et 6 ne comporte pas la broche (25) et l'élément de support (26).

Il est particulièrement rare de travailler dans un champ sans le moindre obstacle (P). Un obstacle (P) est généralement réalisé sous la forme de cailloux, voire de mottes de terre ou encore par les reliefs de labour qui donnent un sol (S) très irrégulier.

Dans l'exemple de réalisation représenté sur la figure 4, le dispositif de traçage (1) arrive en contact avec un tel obstacle (P). Lorsque le disque traceur (4) heurte un tel obstacle (P) celui-ci entraîne un choc qui est transmis au bras (10) et si l'effort est supérieur à l'effort de précontrainte, le bras (10) pivote vers l'arrière autour de ladite deuxième articulation (12). Ce pivotement entraîne une élongation du ressort (21 ) et par conséquent le rapprochement de la liaison élastique (19) vers la deuxième articulation (12). Le tirant (20) se rapproche jusqu'à venir en butée contre ladite deuxième articulation (12). La distance entre la deuxième articulation (12) et la quatrième articulation (24) diminue sensiblement proportionnellement à la longueur de l'allongement du ressort (21) ce qui permet de conserver un effort sensiblement constant. Dans cette première phase, le tirant (20) et le ressort (21) sont encore sensiblement alignés l'un par rapport à l'autre.

Le pivotement du bras (10) est définit par un angle (Alpha) entre la position du bras (10) avant pivotement et la position du bras (10) après pivotement. Dans cette phase, l'effort sur le disque traceur (4) est sensiblement constant car le tirant (20) se rapproche de ladite deuxième articulation (12) proportionnellement à l'allongement du ressort (21).

De plus lors d'un choc, une sécurité mécanique est prévue pour éviter la détérioration du dispositif de traçage (1). Cette sécurité mécanique, connue de l'homme de l'art, réalisée par une vis de cisaillement qui se casse lors d'un choc très important contre un obstacle (P). L'avant-bras (5) peut alors pivoter vers l'arrière sans résister.

Sur la figure 5, le disque traceur (4) passe au-dessus de l'obstacle (P). Le bras (10) pivote d'une plus grande amplitude autour de la deuxième articulation (12). Dans cette seconde phase, le ressort (21) pivote, quant à lui, également autour de ladite quatrième articulation (24). Ce pivotement rompt l'alignement entre le tirant (20) et le ressort (21). La valeur de l'angle (Alpha) est avantageusement proportionnelle à la taille de l'obstacle (P) surmonté par le disque traceur (4). Durant cette seconde phase, l'effort est sensiblement constant par rapport à l'angle de pivotement (Alpha). L'effort sur le disque traceur (4) est sensiblement constant dans la seconde phase, toutefois l'effort aura tendance à augmenter légèrement jusqu'à ce que l'obstacle (P) soit franchit.

Cette liaison élastique (19) permet donc de limiter l'effort transmis par le disque traceur (4) à une valeur pratiquement constante sensiblement égale à la valeur de l'effort de précontrainte sur une course très importante de dégagement du disque traceur (4). L'effort transmis par le disque traceur (4) à l'avant-bras (5) reste, quel que soit l'exemple de réalisation représenté dans les figures 3 à 5, toujours sensiblement égale à la valeur de l'effort de précontrainte du ressort (21).

Il est possible d'augmenter ou de diminuer légèrement l'effort en fonction de l'angle (Alpha) en faisant varier la géométrie. Dans ce cas, on remplacerait le tirant (20) par un câble qui s'enroulerait sur une came autour de la deuxième articulation (12) afin de contrôler la distance entre la deuxième et la quatrième articulation (12, 24) en continu.

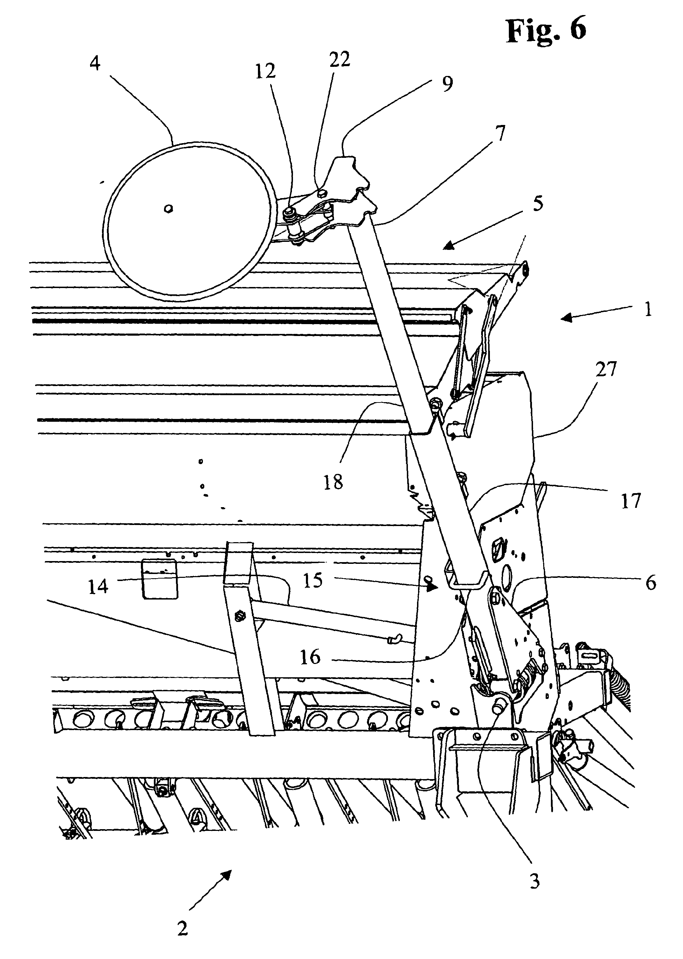

Dans l'exemple de réalisation de la figure 6, le dispositif de traçage (1) est représenté dans une autre configuration de transport dans laquelle ledit bras (10) est escamoté. Cette configuration permet d'adapter la largeur du semoir (2) au gabarit routier de 3 mètres. Dans cette autre configuration, les disques traceurs (4) sont disposés sensiblement au-dessus de la trémie (27) du semoir (2) et l'encombrement en largeur du semoir (2) est ainsi réduit. A cet effet, chaque disque traceur (4) et son bras (10) respectif pivotent autour de la troisième articulation (22) d'environ 180° pour se retrouver dans un plan sensiblement au-dessus de la trémie (27). Ainsi, le semoir (2) est conforme aux réglementations en vigueur pour la circulation sur les routes. Au préalable, la broche (25) est désolidarisée de sa position de travail, figure 7 et mise dans sa configuration de transport, figure 8. Cette broche (25) permet de bloquer la rotation dudit bras (10) autour de la troisième articulation (22) lorsque le bras (10) est escamoté au-dessus de la trémie (27). A la lumière de la figure 8, la broche (25) passe au travers de l'élément de support (26) et au travers d'une seule patte du support (9).

Cette invention s'applique à tous types de semoirs indépendamment du fait qu'il sera un semoir en ligne ou un semoir de précision (non représenté). Un tel dispositif de traçage (1) s'adapte aussi sur d'autres machines de travail du sol telles que des herses rotatives, des fraises rotatives...

Il n'est pas à exclure qu'un tel système de fixation (8) soit adapté sur les traceurs de pré-levée qui sont situés à l'arrière dudit semoir (2). Ces traceurs de pré-levée peuvent ainsi aussi échapper aux obstacles (P) sans transmettre d'efforts importants sur leurs bras de liaison montés sur le semoir (2). Ces traceurs de prélevées marquent des sillons sur le sol (S) en vue des traitements phytosanitaires.

## Revendications

1. Dispositif de traçage (1) comportant un avant-bras (5) et un disque traceur (4), l'avant-bras (5) étant lié à une machine agricole de travail du sol au moyen d'une première articulation (3), ledit disque traceur (4) étant lié audit avant-bras (5) au moyen d'un système de fixation (8) comportant une liaison élastique (19) ***caractérisé en ce* que** ledit système de fixation (8) comporte en sus un support (9) et un bras (10), ladite liaison élastique (19), composée d'un tirant (20) et d'un ressort (21), agit entre ledit support (9) et ledit bras (10).

2. Dispositif de traçage selon la revendication 1, ***caractérisé en ce* que** ledit support (9) est relié à l'avant-bras (5) et que le bras (10) est lié audit support (9) au moyen d'une deuxième articulation (12).

3. Dispositif de traçage selon la revendication 1 ou 2, ***caractérisé en ce* que** ladite liaison élastique (19) est disposée à l'intérieur dudit bras (10).

4. Dispositif de traçage selon la revendication 1, ***caractérisé en ce* qu'**une extrémité dudit tirant (20) est relié audit support (9) au moyen d'une troisième articulation (22) et qu'une extrémité dudit ressort (21) est lié audit bras (10) via un moyen de fixation (23).

5. Dispositif de traçage selon la revendication 1 ou 4, ***caractérisé en ce* que** ledit tirant (20) et ledit ressort (21) sont liés l'un à l'autre par une de leurs extrémités et que cette liaison forme une quatrième articulation (24).

6. Dispositif de traçage selon les revendications 2 et 4, ***caractérisé en ce* que** ladite deuxième articulation (12) est disposée entre ladite troisième articulation (22) et l'axe (x-x') du disque traceur (4).

7. Dispositif de traçage selon la revendication 6, ***caractérisé en ce* que** l'axe (x-x') du disque traceur (4) s'étend sensiblement à la verticale de ladite deuxième articulation (12) lors du travail.

8. Dispositif de traçage selon les revendications 2 et 5, ***caractérisé en ce* que** ladite quatrième articulation (24) s'étend au voisinage de ladite deuxième articulation (12).

9. Dispositif de traçage selon l'une quelconque des revendications 2 à 8, ***caractérisé en ce* que** lesdites première, deuxième, troisième et quatrième articulations (3, 12, 22, 24) sont sensiblement horizontales au travail.

10. Dispositif de traçage selon l'une quelconque des revendications 1 à 9, ***caractérisé en ce* que** ladite liaison élastique (19) permet de limiter l'effort transmis par le disque traceur (4) à l'avant-bras (5) à une valeur sensiblement constante sur une course de dégagement importante du disque traceur (4).

11. Dispositif de traçage selon l'une quelconque des revendications 2 à 10, ***caractérisé en ce* que** la distance entre ladite deuxième articulation (12) et ladite quatrième articulation (24) diminue sensiblement proportionnellement à la longueur de l'allongement dudit ressort (21).

12. Dispositif de traçage selon la revendication 11, ***caractérisé en ce* que** ledit ressort (21) est un ressort de traction.

13. Dispositif de traçage selon l'une quelconque des revendications 1 à 12, ***caractérisé en ce* que** lorsque ledit bras (10) pivote vers l'arrière autour de ladite deuxième articulation (12), ledit tirant (20) vient en butée contre ladite deuxième articulation (12).

14. Dispositif de traçage selon l'une quelconque des revendications 4 à 13, ***caractérisé en ce* que** lors du travail, ledit bras (10) est en butée contre ladite troisième articulation (22), la rotation dudit bras (10) autour de ladite troisième articulation (22) est bloquée par une broche (25).

15. Dispositif de traçage selon l'une quelconque des revendications 1 à 14, ***caractérisé en ce* que** ledit bras (10) est bloqué par ladite broche (25) pour le transport.

16. Machine agricole de travail du sol ***caractérisé en ce* qu'**elle comporte un dispositif de traçage (1) selon l'une quelconque des revendications 1 à 15.

## Claims

1. Marking device (1) comprising a forearm (5) and a marking disc (4), the forearm (5) being connected to an agricultural soil-working machine by means of a first articulation (3), the said marking disc (4) being connected to the said forearm (5) by means of a fixing system (8) comprising an elastic connection (19), ***characterized in* that** the said fixing system (8) additionally comprises a support (9) and an arm (10), the said elastic connection (19), made up of a tie rod (20) and of a spring (21), acts between the said support (9) and the said arm (10).

2. Marking device according to Claim 1, ***characterized in* that** the said support (9) is connected to the forearm (5) and ***in* that** the arm (10) is connected to the said support (9) by means of a second articulation (12).

3. Marking device according to Claim 1 or 2, ***characterized in* that** the said elastic connection (19) is positioned inside the said arm (10).

4. Marking device according to Claim 1, ***characterized in* that** one end of the said tie rod (20) is connected to the said support (9) by means of a third articulation (22), and ***in* that** one end of the said spring (21) is connected to the said arm (10) via a fixing means (23).

5. Marking device according to Claim 1 or 4, ***characterized in* that** the said tie rod (20) and the said spring (21) are connected to one another by one of their ends and **in that** this connection forms a fourth articulation (24).

6. Marking device according to Claims 2 and 4, ***characterized in* that** the said second articulation (12) is positioned between the said third articulation (22) and the axis (x-x') of the marking disc (4).

7. Marking device according to Claim 6, ***characterized in* that** the axis (x-x') of the marking disc (4) extends substantially vertically to the said second articulation (12) during work.

8. Marking device according to Claims 2 and 5, ***characterized in* that** the said fourth articulation (24) extends near the said second articulation (12).

9. Marking device according to any one of Claims 2 to 8, ***characterized in* that** the said first, second, third and fourth articulations (3, 12, 22, 24) are substantially horizontal during work.

10. Marking device according to any one of Claims 1 to 9, ***characterized in* that** the said elastic connection (19) makes it possible to limit the force transmitted by the marking disc (4) to the forearm (5) to a substantially constant value over a significant excursion travel of the marking disc (4).

11. Marking device according to any one of Claims 2 to 10, ***characterized in* that** the distance between the said second articulation (12) and the said fourth articulation (24) decreases substantially in proportion to the amount of elongation of the said spring (21).

12. Marking device according to Claim 11, ***characterized in* that** the said spring (21) is a tension spring.

13. Marking device according to any one of Claims 1 to 12, ***characterized in* that** when the said arm (10) pivots backwards about the said second articulation (12), the said tie rod (20) comes into abutment against the said second articulation (12).

14. Marking device according to any one of Claims 4 to 13, ***characterized in* that**, during work, the said arm (10) is in abutment against the said third articulation (22), the rotation of the said arm (10) about the said third articulation (22) is prevented by a pin (25).

15. Marking device according to any one of Claims 1 to 14, ***characterized in* that** the said arm (10) is immobilized by the said pin (25) for transport.

16. Agricultural soil-working machine, ***characterized in* that** it comprises a marking device (1) according to any one of Claims 1 to 15.

## Patentansprüche

1. Markierungsvorrichtung (1) mit einem Ausleger (5) und einer Spurreißscheibe (4), wobei der Ausleger (5) mit einer landwirtschaftlichen Bodenbearbeitungsmaschine mittels eines ersten Gelenks (3) verbunden ist, wobei die Spurreißscheibe (4) mit dem Ausleger (5) mittels eines Befestigungssystems (8) verbunden ist, das eine elastische Verbindung (19) umfasst, ***dadurch gekennzeichnet,* dass** das Befestigungssystem (8) zusätzlich eine Stütze (9) und einen Arm (10) umfasst, wobei die elastische Verbindung (19), die aus einer Zugstange (20) und einer Feder (21) besteht, zwischen der Stütze (9) und dem Arm (10) wirkt.

2. Markierungsvorrichtung nach Anspruch 1, ***dadurch gekennzeichnet,* dass** die Stütze (9) mit dem Ausleger (5) verbunden ist, und dass der Arm (10) mit der Stütze (9) mittels eines zweiten Gelenks (12) verbunden ist.

3. Markierungsvorrichtung nach Anspruch 1 oder 2, ***dadurch gekennzeichnet,* dass** die elastische Verbindung (19) im Inneren des Arms (10) angeordnet ist.

4. Markierungsvorrichtung nach Anspruch 1, ***dadurch gekennzeichnet,* dass** ein Ende der Zugstange (20) mit der Stütze (9) mittels eines dritten Gelenks (22) verbunden ist, und dass ein Ende der Feder (21) mit dem Arm (10) über ein Befestigungsmittel (23) verbunden ist.

5. Markierungsvorrichtung nach Anspruch 1 oder 4, ***dadurch gekennzeichnet,* dass** die Zugstange (20) und die Feder (21) miteinander mit einem ihrer Enden verbunden sind, und dass diese Verbindung ein viertes Gelenk (24) bildet.

6. Markierungsvorrichtung nach den Ansprüchen 2 und 4, ***dadurch gekennzeichnet,* dass** das zweite Gelenk (12) zwischen dem dritten Gelenk (22) und der Achse (x-x') der Spurreißscheibe (4) angeordnet ist.

7. Markierungsvorrichtung nach Anspruch 6, ***dadurch gekennzeichnet,* dass** sich die Achse (x-x') der Spurreißscheibe (4) im Wesentlichen in der Vertikalen des zweiten Gelenks (12) bei der Arbeit erstreckt.

8. Markierungsvorrichtung nach den Ansprüchen 2 und 5, ***dadurch gekennzeichnet,* dass** sich das vierte Gelenk (24) in der Nähe des zweiten Gelenks (12) erstreckt.

9. Markierungsvorrichtung nach irgend einem der Ansprüche 2 bis 8, ***dadurch gekennzeichnet,* dass** das erste, zweite, dritte und vierte Gelenk (3, 12, 22, 24) im Wesentlichen während der Arbeit horizontal sind.

10. Markierungsvorrichtung nach irgend einem der Ansprüche 1 bis 9, ***dadurch gekennzeichnet,* dass** es die elastische Verbindung (19) ermöglicht, die von der Spurreißscheibe (4) auf den Ausleger (5) übertragene Kraft auf einem im Wesentlichen konstanten Wert auf einem großen Freilaufweg der Spurreißscheibe (4) zu begrenzen.

11. Markierungsvorrichtung nach irgend einem der Ansprüche 2 bis 10, ***dadurch gekennzeichnet,* dass** der Abstand zwischen dem zweiten Gelenk (12) und dem vierten Gelenk (24) im Wesentlichen proportional zur Länge der Dehnung der Feder (21) abnimmt.

12. Markierungsvorrichtung nach Anspruch 11, ***dadurch gekennzeichnet,* dass** die Feder (21) eine Zugfeder ist.

13. Markierungsvorrichtung nach irgend einem der Ansprüche 1 bis 12, ***dadurch gekennzeichnet,* dass**, wenn der Arm (10) nach hinten um das zweite Gelenk (12) schwenkt, die Zugstange (20) am zweiten Gelenk (12) anschlägt.

14. Markierungsvorrichtung nach irgend einem der Ansprüche 4 bis 13, ***dadurch gekennzeichnet,* dass** während der Arbeit der Arm (10) am dritten Gelenk (22) anschlägt, die Drehung des Arms (10) um das dritte Gelenk (22) durch eine Spindel (25) festgestellt wird.

15. Markierungsvorrichtung nach irgend einem der Ansprüche 1 bis 14, ***dadurch gekennzeichnet,* dass** der Arm (10) durch die Spindel (25) für den Transport festgestellt wird.

16. Landwirtschaftliche Bodenbearbeitungsmaschine, ***dadurch gekennzeichnet,* dass** sie eine Markierungsvorrichtung (1) nach irgend einem der Ansprüche 1 bis 15 umfasst.
